# EUROPEAN PATENT APPLICATION

(11) **EP 2 482 068 A2**
(43) Date of publication of application: **01.08.2012**
(21) Application number: 11187472.3
(22) Date of filing: 02.11.2011
(51) Int. Cl.: G01N 30/06, G01N 1/40

(54) **Sample preparation for gas analysis using inductive heating**

(30) Priority: 02.11.2010 US 925933
(71) Applicant: Picarro Inc., Sunnyvale, CA 94085 (US)
(72) Inventor: Hsiao, Gregor, San Jose, CA 95135 (US); Chang, Carl, Los Altos, CA 94024 (US)
(74) Representative: Coyle, Philip Aidan

(57) **Abstract**

Improved gas analysis for non-gaseous samples is provided by placing the sample in direct contact with an inductive heating element, followed by inductively heating the heating element to provide gas for analysis. Disposable sample vials including such a heating element can be employed, or a sample tube including an inductive heating element can be configured to mate to the input gas line of a gas analysis system.

## Description

### FIELD OF THE INVENTION

This invention relates to sample preparation for gas analysis.

### BACKGROUND

It is frequently desirable to apply gas analysis techniques to non-gaseous samples. For example, extraction of hydrogen, carbon, oxygen and other elements from solid and liquid samples by a combination of heating/controlled atmosphere to release or form water, carbon monoxide, carbon dioxide and other gases is a common approach to analyze water, carbon, and isotopic composition of samples. One of the most common of these procedures is cryogenic vacuum distillation in which a sample is heated under vacuum and a cold trap captures the released water vapor. This and other similar procedures can be extremely time consuming (e.g., approximately 24 hours), labor intensive, and can require relatively large samples. Carbon samples can be obtained through pyrolysis or combustion of samples using large furnace apparatus using resistive heating and/or oxidation of the sample to achieve the required temperatures.

Inductive heating has been employed in some analysis methods. Inductive heating entails the use of an applied electromagnetic field to deliver energy to a target. Two physical mechanisms can contribute to this heating effect: resistive heating due to eddy currents in the target, and magnetic hysteresis loss in the target. Induction heating is used for high efficiency furnaces, microwelding, and for small electrical appliances such as soldering irons and rice cookers.

In US 3,507,144, gas analysis of metallic samples is of interest, and induction heating is employed to melt the sample to liberate gas for analysis. In US 2,779,581, an analysis crucible is provided that includes a cup-shaped heating element surrounded by a protective envelope. The heating element can be heated inductively such that a sample in the crucible combusts to provide gas for analysis. The envelope serves to protect the sample from contamination by the heating element, and also serves to protect the heating element from deterioration in use.

The invention provides an analysis method as claimed in Claim 1. The invention also provides an apparatus as claimed in Claim 10.

We have found that conventional approaches for using inductive heating for gas analysis (e.g., as described above) do not fully exploit its advantages. In particular, induction heating provides heat directly to the target material, thus induction heating is highly efficient, localized, and capable of very fast heating rates. Targeted reproducible temperatures can be achieved through appropriate electrical circuit design and choice of target material type, size, and shape.

One way to exploit these features is the use of sample vials. For example, a sample vial can include an inductive heating element. A sample can be placed in the vial (in contact with the heating element), and then the vial can be sealed under controlled gaseous ambient conditions. At any convenient later time, the heating element can be inductively heated to liberate one or more gaseous analytes from the sample, which are then provided to a gas analysis system for analysis.

Alternatively, a sample tube can be employed that is adapted to be placed into the input line of a gas analysis system and which includes an inductive heating element in contact with a sample. Inductively heating the heating element can liberate gaseous analytes from the sample, which flow into the gas analysis system for analysis.

The present approach provides significant advantages. The efficient and localized nature of induction heating allows for an extremely compact unit for generating gaseous samples. Furthermore, since heating only occurs at the heating element, inefficient and dangerous hot surfaces are avoided. Unlike resistive heating, there is no requirement of good thermal contact between sample holder and heating element. Consistent placement of the heating element within the applied field and good contact of sample to the heating element will suffice.

The applied field can be provided by a coil of insulated wire to eliminate the risk of electric shock where the user must introduce the sample. The heating element can be of large mass relative to the actual samples, furthermore it can be mass manufactured with constant dimensions and magnetic permeability, which ensures samples will reach a consistent temperature at each run.

The use of disposable heating elements prevents cross-contamination between samples. By using a heating element made from flexible metal sheet or foil, the sample can easily be captured and make good contact with the heating element by crimping. Use of different shaped stamped foil cutouts can accommodate different sample shapes, for example a leaf sample may be in the form of a flat disc whereas a plant stem sample may be rectangular and of different thicknesses.

Because heating is extremely quick (within seconds) and localized to the heating element, a time controlled pulse of gaseous sample can be generated for analysis which allows measurement at optimal concentrations and minimizes measurement duration and associated drift. Because the heated mass is limited to the heating element, it facilitates quick and safe removal of analyzed samples to increase analysis throughput.

### BRIEF DESCRIPTION OF THE DRAWINGS

**Fig. 1** shows an example of gas analysis in accordance with an embodiment of the invention.
**Figs. 2a****-b** show a sample vial suitable for use in embodiments of the invention
**Figs. 3a****-b** show another sample vial suitable for use in embodiments of the invention.
**Figs. 4a****-b** show an example of direct coupling of a sample tube to an input gas line for gas analysis.
**Fig. 5** shows an example of a sample vial having an inductive heating element that can be crimped around a sample.

### DETAILED DESCRIPTION

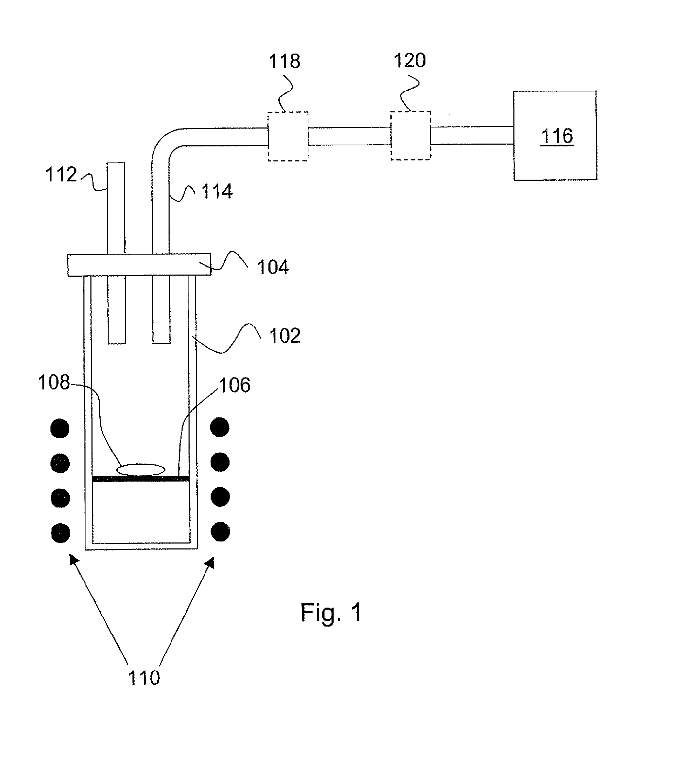

**Fig. 1** shows an example of gas analysis in accordance with an embodiment of the invention. In this example, a non-gaseous sample 108 is disposed in contact with an inductive heating element 106. Sample 108 and heating element 106 are disposed in a sample vial 102, which is sealed with a lid 104. Gas lines 112 and 114 penetrate lid 104. Gas line 112 provides inert gas to sample vial 102, while gas line 114 delivers gas from sample vial 102 to gas analysis instrument 116. Oscillating electric current in a coil 110 provides inductive heating of heating element 106, which liberates one or more gaseous analytes from sample 108 for analysis. Optionally, pre-analysis conditioning of the gas from sample vial 102 can be performed, such as filtering (e.g., with filter element 118) and other kinds of preconditioning (e.g., with preconditioner 120).

induction heating uses oscillating electrical current passing through coil 110 to induce heating of heating element 106 inside the coil. Heating element 106 can be any material capable of being inductively heated. Preferably, the magnetic permeability of heating element 106 is 10 mH/m or more. Suitable materials for heating element 106 include but are not limited to: soft iron, pressed ferrite, mild steel and electrical steel.

To measure analyte present in sample vial atmosphere, the analyzer can first draw a clean stream of gas followed by the sample vial atmosphere. This can be achieved with diversion valves that route the carrier gas flow directly from an inert gas source to the analyzer when the sample vial is not engaged. The volume of carrier gas lines beyond the valve can be calculated and, together with measurement of the outside ambient atmosphere, be accounted for in the measurement.

Once a controlled atmosphere has been achieved using gas lines 112 and 114, current will be allowed to flow to coil 110. At lower temperatures (approximately 50-200 °C) water present in the sample will be liberated. For samples where the water is contained within membranes/cell walls (such as plant samples) the water release process may be accelerated by crushing the sample either prior to introduction or between two appropriately textured elements, either or both of which may also be heating elements, when the sample vial lid is closed,

The use of inductive heating provides for flexible temperature control of the sample. For example, two or more distinct sample temperatures can be employed during an analysis. The temperature is determined by the induction heating and also by the geometry and orientation of the heating element with respect to the induction coil. Induction heating control electronics can be programmed with multiple heating routines. The heating element can be subjected to a sequence of induction heating routines to release desired gaseous samples under different atmosphere conditions or to optimize the release of gas from different sample types. For example the heating element can first be heated to 150 °C under nitrogen to release water from the sample. The second heating routine can be under oxygen at 1100 °C to combust the sample and liberate the carbon as carbon dioxide. This sequence will allow the measurement of water content, isotopic ratio of oxygen and hydrogen in the water, carbon content, and isotopic ratio of C¹³ to C¹² when analyzing the generated gaseous samples using optical spectroscopy, such as cavity ring-down spectroscopy (CRDS), or other technology. The heating control algorithms can also be optimized based on the sample and heating element. Depending upon the sample type, size, and thickness, different temperatures and durations may be required to completely extract the desired components.

In some cases, gas analysis is also performed prior to inductive heating. For example, a sample in a sealed vial can outgas over time. In such cases, the sample vial can be flushed via gas lines 112 and 114 prior to the inductive heating to provide analysis of the released gas. Subsequent inductive heating and gas analysis of the sample can be performed, thereby providing separate measurement results for sample outgassing and for heat-extracted gas from the sample.

The present approach is suitable for performing analysis of any gaseous analytes liberated from a non-gaseous sample, including but not limited to: H₂O, CO₂, NH₃, H₂S, H₂CO, C₂H₄, and CO. The gaseous analyte(s) can be provided by direct volatilization of compound(s) present in the sample. The gaseous analyte(s) can also be provided as product(s) of chemical reaction having compound(s) present in the sample as reactant(s).

The present approach is suitable for use with any kind of non-gaseous sample, including but not limited to: bound liquids in a solid matrix, plant material, animal tissue, soil samples, food products, suspensions, ointments, creams, industrial products, pharmaceutical products, and industrial products.

Any kind of gas analysis can be practiced in connection with this sample handling approach. In preferred embodiments, gas analysis instrument 116 is based on optical spectroscopy. Suitable spectroscopic techniques include, but are not limited to: cavity ring-down spectroscopy, intracavity absorption spectroscopy, and cavity-enhanced absorption spectroscopy.

If present, filter element 118 can be any apparatus that preferentially removes gaseous species which are not of interest for a given analysis from the analyte(s) of interest. For example, filter element 118 can include activated carbon or a sorbent that preferentially removes interfering compounds. As a more specific example, Tenax™ (a 2,6-diphenylene-oxide polymer resin) is well suited for removal of benzene and substituted benzene compounds. Another approach for filter element 118 is the use of a heater and sacrificial surface to remove organic compounds. This approach is based on inducing thermal decomposition and deposition using a heated filament and sacrificial surface to remove organics before they reach the analyzer.

If present, preconditioner 120 can be any apparatus that serves to usefully process the gas in gas line 114 prior to analysis in analysis instrument 116. For example, preconditioner 120 can include a cold trap for concentrating the gaseous analytes. As another example, preconditioner 120 can provide dilution of the gaseous analytes with one or more inert gases prior to the gas analysis. As a further example, preconditioner 120 can include chromatographic media to which the analytes have affinity, to allow for separation of a complex mixture in a chromatography separation column.

Gas line 114 may be maintained at an elevated temperature to prevent unintended condensation, carryover, and/or cross contamination with other samples. A multi-step combination of different extraction temperatures, gas flow, and chromatographic media can be used to separate complex mixtures which arise from biological tissues and other non-prepared samples.

Additional down stream processing steps such as further chemical conversion by the use of reactive gases, elevated temperatures, and catalytic media (for example a heated platinum wire in a hydrogen atmosphere will convert carbon-carbon double bonds to carbon-carbon single bonds) can be used to convert the analyte into a readily detectable form. Use of thermal conductivity sensors or other simple sensors can be used to determine the appropriate timing for downstream processing steps.

As indicated above, it can be advantageous for the heating element to be disposable after a single use. By replacing the heating element with an unused heating element after analysis of a single sample, cross sample contamination can be avoided. In some cases, both heating element 106 and vial 102 are disposable.

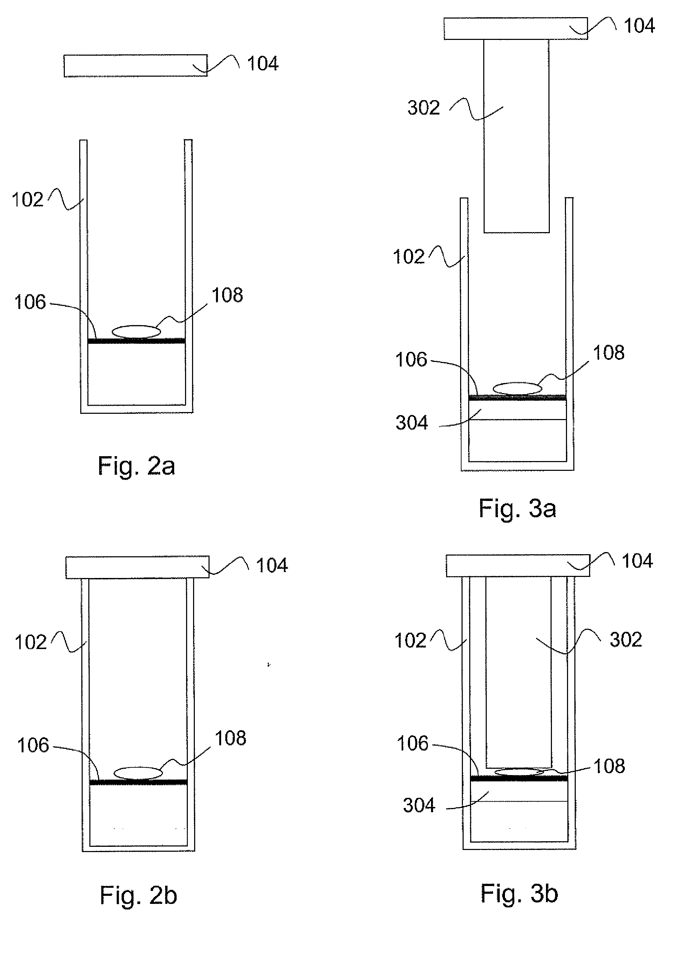

**Figs. 2a****-b** show a sample vial suitable for use in embodiments of the invention. In this example, **Fig. 2a** show a configuration where sample 108 is in the vial, but the vial has not yet been sealed. Fig. 2b shows a post-sealing configuration. The atmosphere of the vial can be controlled by a combination of vacuum and/or inert gas to remove potential contamination by ambient gases. As indicated above, the vial can be sealed under controlled gaseous ambient conditions. Alternatively, the vial can be sealed under uncontrolled gaseous ambient conditions.

**Figs. 3a****-b** show another sample vial suitable for use in embodiments of the invention. In this example, a member 302 is attached to lid 104 such that sample 108 is compressed when the vial is sealed (e.g., as shown on **Fig. 3b**). A support member 304 may be included to provide mechanical support for inductive heating element 106 if needed. Preferably, the compression of sample 108 is sufficiently strong as to tend to crush sample 108, thereby facilitating release of gaseous analytes from the sample.

In cases where a sample vial is used, the entire sample vial (including its sample) can be transported to an analyzer by robotic means or manual transfer. If the sample vial has a robust seal, then samples could be prepared in one geographic location and analyzed in another. Robotic means can be used to pierce the vial septa (i.e., lid 104) to manipulate the atmosphere and transfer the gaseous sample to the analyzer.

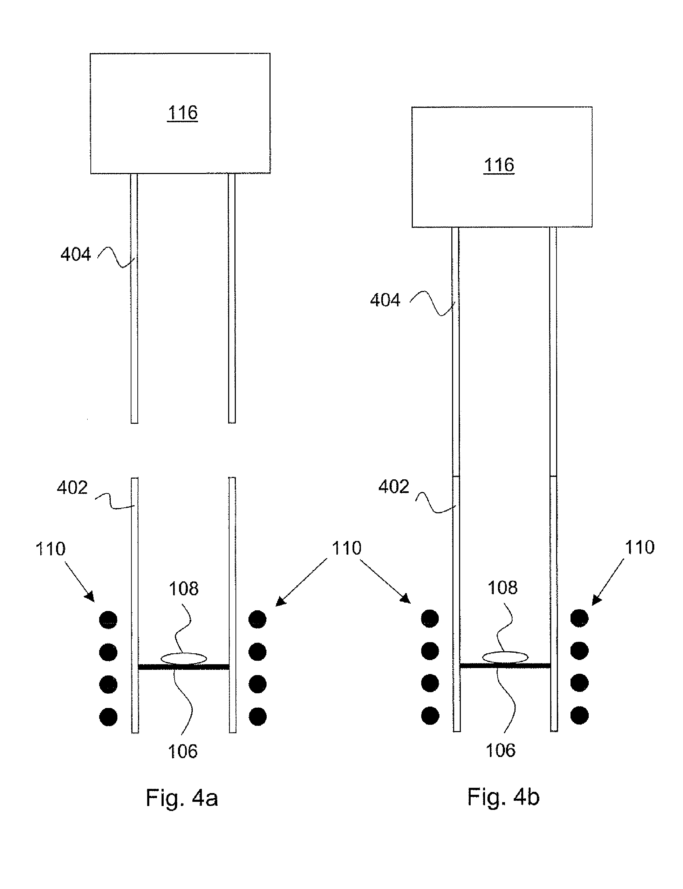

**Figs. 4a****-b** show an example of direct coupling of a sample tube to an input tube for gas analysis. In this example, a gas analysis instrument 116 has an input gas line 404 and sample 108 and heating element 106 are disposed in a sample tube 402. Sample tube 402 is configured to be capable of mating to input gas line 404 (e.g., as shown on **Fig. 4b**). For example, the mating ends of tubes 402 and 404 can be coupled with either a compression fitting or a quick-release fitting. The atmosphere of the tube can be controlled by a combination of vacuum and/or inert gas to remove potential contamination by ambient gases.

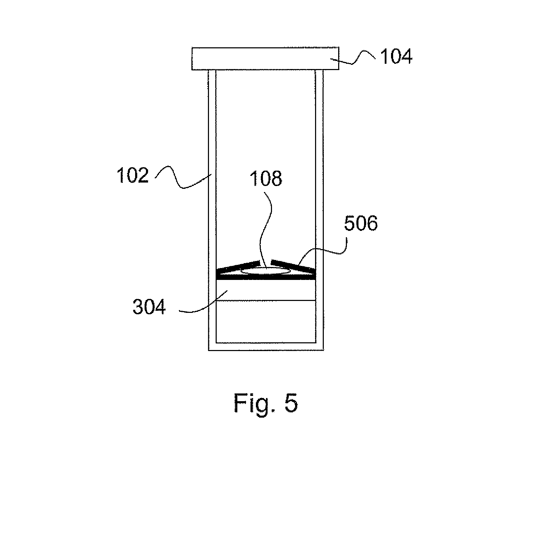

**Fig. 5** shows an example of a sample vial having an inductive heating element that can be crimped around a sample. In this example, an inductive heating element 506 is configured as a sample holder and as a deformable sheet or foil that can be crimped around the sample, as shown.

The preceding description has been by way of example as opposed to limitation, and practice of the invention also includes many variations of the given examples. The preceding examples show the sample tube or sample vial being enclosed by the inductive heating coil 110. It is also possible to place inductive heating coil 110 inside the sample vial or sample tube. Practice of the invention does not depend critically on details of the composition, size or shape of the sample vial or sample tube.

## Claims

1. An analysis method for non-gaseous samples, the method comprising:
providing a sample vial including a heating element capable of being inductively heated;
placing a non-gaseous sample in the sample vial in contact with the heating element;
sealing the vial;
inductively heating the heating element to liberate one or more gaseous analytes from the sample; and
performing gas analysis of the gaseous analytes.

2. The method of claim 1, wherein sealing the vial entails providing a mechanical force tending to crush the non-gaseous sample.

3. The method of claim 1, wherein the gaseous analytes are provided by direct volatilization of one or more compounds present in the sample.

4. The method of claim 1, wherein the gaseous analytes are provided as one or more products of one or more chemical reactions having one or more compounds present in the sample as one or more reactants.

5. The method of claim 1, further comprising diluting the gaseous analytes with one or more inert gases prior to the gas analysis.

6. The method of claim 1, further comprising passing the gaseous analytes through a chromatography separation column.

7. The method of claim 1, wherein the gas analysis comprises one or more optical analysis techniques based on optical spectroscopy.

8. The method of claim 1, wherein the inductively heating and performing gas analysis are performed at two or more distinct sample temperatures.

9. The method of claim 1, further comprising replacing the heating element with an unused heating element after analysis of a single sample.

10. Apparatus for analysis of non-gaseous samples, the apparatus comprising:
a sample vial including a heating element capable of being inductively heated;
wherein the vial is configured such that a non-gaseous sample placed in the vial is in direct contact with the heating element; and
wherein the vial is configured such that it can be sealed.

11. The apparatus of claim 10, wherein the vial is configured to apply a mechanical force tending to crush the non-gaseous sample when the vial is sealed.

12. The apparatus of claim 10, wherein the heating element has a magnetic permeability of 10 mH/m or more.

13. The apparatus of claim 10, wherein the heating element is disposable.

14. The apparatus of claim 13, wherein the vial and heating element are both disposable.

15. The apparatus of claim 10, wherein the heating element is configured as a sample holder.

16. The apparatus of claim 15, wherein the heating element is configured as a deformable sheet or foil that can be crimped around the sample.
